# EUROPÄISCHE PATENTANMELDUNG

(11) **EP 3 741 714 A1**
(43) Veröffentlichungstag der Anmeldung: **25.11.2020**
(21) Anmeldenummer: 19176277.2
(22) Anmeldetag: 23.05.2019
(51) Int. Cl.: B65G 45/16, B65G 45/22, B65G 45/24

(54) **ABSTREIFVORRICHTUNG FÜR FÖRDERBÄNDER**

(71) Anmelder: Maschinenbau Krumscheid GmbH, 53547 Breitscheid (DE)
(72) Erfinder: Martin, Krumscheid, 53547 Roßbach/Wied (DE); Sarah, Krumscheid, 53547 Roßbach/Wied (DE); Gregor, Krumscheid, 53547 Roßbach/Wied (DE)
(74) Vertreter: Hoppe, Lars

(57) **Zusammenfassung**

Die vorliegende Erfindung betrifft eine Abstreifvorrichtung (1) für die Reinigung von Förderbändern (30) aufweisend eine Abstreifkante (7) einen Grundkörper (2) und eine Mehrzahl von an diesem angeordneten Abstreifsegmenten (3) oder ein einstückiges, an diesem angeordnetes Abstreifsegment (3.1), wobei jedes Abstreifsegment (3, 3.1) eine Segmentbasis (4) und ein daran angeordnetes Übergangselement (5) aufweist, wobei jedes Abstreifsegment (3, 3.1) an der Segmentbasis (4) mit dem Grundkörper (2) lösbar verbunden ausgebildet ist und ist dadurch gekennzeichnet, dass das Übergangselement (5) ein federnder Übergangssteg (6) ist und dass die Abstreifkante (7) einstückig und alle Abstreifsegmente (3, 3.1) miteinander verbindend ausgebildet ist.

## Beschreibung

Die vorliegende Erfindung betrifft einen Abstreifer zur Reinigung von verschmutzten Förderbändern, insbesondere Förderbändern, auf denen verschmutzendes Schüttgut, wie Fleisch, Kartoffeln oder Schokolade transportiert wird.

Aus dem Stand der Technik ist eine Vielzahl an quer zu einer Laufrichtung eines Förderbandes angeordneten Abstreifvorrichtungen zur Reinigung des Förderbandes bekannt. Aus der EP 1 036 748 A2 ist eine Abstreifvorrichtung für Förderbänder bekannt, die aus mehreren Abstreifelementen besteht, die auf eine Welle angeordnet sind. Dabei ist jedes Abstreifsegment jeweils mit einer separaten Abstreifklinge verbunden, die das zu reinigende Förderband kontaktiert. Die Abstreifelemente weisen dabei jeweils einen etwa keilförmigen, sich zur Abstreifkante leicht verjüngenden Querschnitt auf. Die jeweilige Abstreifkante ist über einen u-förmigen Anker mit dem zugehörigen Abstreifelement verbunden.

Nachteilig an dieser Vorrichtung ist, dass einzelne Abstreifkanten durch starke punktuelle Belastungen teilweise oder ganz aus den Abstreifelementen herausbrechen können. Auch können sich an den Übergangen zwischen den einzelnen Abstreifkanten Verschmutzungen sammeln. Durch die relative Starrheit der Abstreifelemente ist eine Vorspannung gegen das Förderband nur in geringem Maße möglich, da ansonsten die punktuellen Abnutzungen verstärkt würden oder gar Verbiegung der Elemente verursacht werden könnten. Unregelmäßigkeiten wie Vertiefungen im Förderband selbst können somit kaum ausgeglichen werden, was die Reinigungswirkung weiter verschlechtert. Damit kann insgesamt keine dauerhaft gleichmäßige Reinigung des Förderbandes gewährleistet werden.

Die Erfindung hat sich daher zur Aufgabe gestellt, einen Abstreifer für ein Förderband vorzuschlagen, der betriebssicher eine gleichmäßige Reinigung des Förderbands ermöglicht.

Diese Aufgabe löst eine Abstreifvorrichtung aufweisend eine Abstreifkante, einen Grundkörper und eine Mehrzahl von an diesem angeordneten Abstreifsegmenten oder ein einstückiges, an diesem angeordnetes Abstreifsegment, welches entlang einer zum Grundkörper parallelen Achse eine Mehrzahl von Langlöchern aufweist, wobei jedes Abstreifsegment eine Segmentbasis und einen daran angeordnetes Übergangselement aufweist, wobei jedes Abstreifsegment an der Segmentbasis mit dem Grundkörper lösbar verbunden ausgebildet ist, wobei das Übergangselement ein federnder Übergangssteg ist und dass die Abstreifkante einstückig und alle Abstreifsegmente miteinander verbindend ausgebildet ist.

Diese Ausführung schafft mit großem Vorteil eine durchgängige Abstreifkante ohne Zwischenräume, die zu Sammlungsherden für Verschmutzungen werden können. Gleichzeitig schafft die Erfindung eine flexible Vorrichtung, bei der Verwendung mehrerer Abstreifelemente weiterhin eine Ausweichbewegung einzelner Segmente relativ zu den übrigen Segmenten ermöglichend ist. Gleiches gilt für das einstückige, Langlöcher aufweisende Abstreifsegment - durch die Langlöcher werden entlang einer parallel zum Grundkörper orientierten Achse eine Mehrzahl an Bereichen geringerer Materialstärke geschaffen, wodurch eine gewisse Elastizität und innere Beweglichkeit des einstückigen Abstreifsegments resultiert. Die federnde Wirkung des Übergangssteges relativ zur Basis des Abstreifsegmentes ermöglicht mit großem Vorteil ein stärkeres Vorspannen von Abstreifsegmenten gegen das zu reinigende Förderband. Bei infolge grober Verschmutzungen des Förderbandes auf das Abstreifsegment wirkender Kräfte, ermöglicht die Elastizität des Übergangssteges mit großem Vorteil eine vergrößerte, reversible Ausweichbewegung des Abstreifsegments. Dadurch ist die Kraft besser in die Vorrichtung ableitbar und eine starke Abnutzung der Abstreifkante und/oder Verformung des Förderbandes wird verhindert. Die Elastizität des Übergangssteges ist über dessen Materialdicke festlegbar, so dass an die jeweilige Reinigungsaufgabe angepaßte, optimierte Abstreifsegmente herstellbar sind. Mit großem Vorteil ist der erfindungsgemäße Abstreifer Unregelmäßigkeiten in der Oberfläche eines zu reinigenden Förderbandes kompensierend und eine effektive und materialschonende Reinigung des Förderbandes ermöglichend.

In Weiterbildung der Erfindung ist vorgesehen, dass die Abstreifkante einen keilförmigen Querschnitt aufweist. Dadurch ist die Ausbildung einer breiten Oberfläche zur Verbindung mit dem Abstreifsegment bei einer gleichzeitigen Ausbildung einer schmalen Fläche bzw. Kante zur Kontaktierung des Förderbandes, die eine vergrößerte Abstreifwirkung hat, ermöglicht.

In Ausgestaltung der Erfindung ist vorgesehen, dass die Abstreifkante formschlüssig mit dem einstückigen Abstreifsegment oder den Abstreifsegmenten verbunden ist, insbesondere in eine Verbindungseinrichtung eingeschoben, eingeklickt oder eingegossen ist. Diese Ausgestaltung verhindert sehr vorteilhaft die Bildung von Lücken, in denen sich Verschmutzungen sammeln können. Weiterhin ist so eine stabile, einfach zu fertigende Verbindung der Abstreifkante mit den Abstreifsegmenten ermöglicht.

Weist die Segmentbasis einen Hohlkörper auf und ist dieser auf den korrespondierend geformten Grundkörper aufgeschoben, so ist ein Abstreifelement mit einer wählbaren Anzahl von Abstreifsegmenten einfach konstruierbar. Hierdurch ist auch eine erfindungsgemäße Vorrichtung an eine neue Reinigungsaufgabe anpaßbar, nämlich durch Erhöhen oder Reduzieren der Anzahl an Abstreifsegmente pro Vorrichtung.

Die Hohlkörperform der Segmentbasis schafft eine sichere, da radial wirkende Verbindung mit dem Grundkörper, die auch größeren, auf das Abstreifsegment einwirkenden, Kräften standhält.

In Weiterbildung der Erfindung ist vorgesehen, dass der Grundkörper zylinderförmig ist, insbesondere eine kreisförmige, rechteckige, quadratische oder sechseckige Grundfläche aufweist und insbesondere aus Stahl oder Kunststoff gefertigt ist. Diese Ausführung ermöglicht die Verwendung von Standardmaterialien, während auf die Verbindung von Grundkörper und Segmentbasis wirkende Kräfte vorteilhaft radial ableitbar sind. Dabei sind auch andere Materialien mit hoher Stabilität als Material des Grundkörpers verwendbar.

In Ausgestaltung der Erfindung ist vorgesehen, dass der auf den Grundkörper aufgeschobene Hohlkörper axial fixiert wird, insbesondere durch Buchsen, Hülsen, Gewindestift oder mittels Aufpressen durch Kraftschluss. Hierdurch lassen sich Abstreifsegmente konstruktiv einfach axial fixieren bzw. gegeneinander spannen und auf ein Abstreifsegment wirkende Kräfte sind verbessert zumindest teilweise über benachbarte Abstreifsegmente ableitbar.

Der Grundkörper ist außerdem derart vorgesehen, dass er in einem das einstückige Abstreifsegment oder die Abstreifsegmente kontaktierenden Bereich eine sechseckige Grundfläche aufweist und in das einstückige Abstreifsegment oder die Abstreifsegmente nicht kontaktierenden Außenbereichen eine kreisförmig abgedrehte, weitere Grundfläche aufweist. Eine Verbindung von Grundkörper und Segmentbasis ist in dieser Ausgestaltung über eine Pressspannung auf der sechseckigen Grundfläche des Grundkörpers erfolgend, womit keine weiteren Elemente zur Spannung der Abstreifsegmente benötigt werden.

In Ausgestaltung der Erfindung ist weiter vorgesehen, dass die Verbindungseinrichtung an einer zur Abstreifkante weisenden Verbindungsfläche sich in Richtung von der Abstreifkante weg verbreiternde Vertiefungen aufweisen. Diese ermöglichen mit großem Vorteil eine besonders stabile Verbindung von Abstreifsegmenten und Abstreifkante, da senkrecht zur Verbindungseinrichtung wirkende Kräfte durch die jeweilige, ebenfalls in diese Richtung weisende Verjüngung der Vertiefungen gut in das Abstreifsegment ableitbar sind.

Sind die Abstreifsegmente und die Abstreifkante aus Kunststoff gefertigt, insbesondere aus Polyurethan, so wird mit Vorteil eine materialbedingte Flexibilität erreicht, was Abnutzungen reduziert.

In Weiterbildung der Erfindung ist mit Vorteil vorgesehen, dass diese eine Befestigungsvorrichtung zur Befestigung der Abstreifvorrichtung relativ zu einem Förderband aufweist. Damit ist die erfindungsgemäße Abstreifvorrichtung einfach an einem zu reinigenden Förderband positionierbar, ohne dass eine aufwendige Befestigung am Förderband konstruiert werden muss.

Weiterhin ist es vorgesehen, dass die Befestigungsvorrichtung einen Klemmring, insbesondere einen Schnellspannklemmring aufweist. Dabei ist der Grundkörper über ein Einlegen in den Klemmring bzw. Schnellspannklemmring spannbar und mit einem Befestigungselement verbindbar, wobei eine Verbindung von Befestigungselement und Klemmring über Form- oder Stoffschluss vorgesehen ist. Über ein Lösen des Schnellspannklemmrings ist sehr vorteilhaft ein einfaches Wegschwenken der Abstreifvorrichtung ermöglicht, wodurch beispielsweise eine Reinigung oder Wartung der Abstreifvorrichtung ermöglicht ist, ohne dass ein Abbau der gesamten Vorrichtung vom Förderband nötig ist.

Der Übergangssteg ist in Ausgestaltung der Erfindung gebogen. Damit ist die Federwirkung des Übergangssteges bei gleichzeitig verbesserter Positionierbarkeit der Abstreifkante erhöht.

Weiterhin sieht eine Weiterbildung der Erfindung vor, dass am Grundkörper eine Reinigungsvorrichtung in Form einer Reinigungsdüse angeordnet ist, wobei eine Düsenöffnung im Betriebszustand in einer Sichtlinie zum Förderband angeordnet ist. Die Reinigungsdüse ist dabei insbesondere als Spritz-, Sprüh-, Nebel- oder Flachstrahldüse ausgebildet. Eine Reinigung des Förderbandes mit einem Fluid ermöglicht dabei neben der rein mechanischen Reinigungswirkung des Abstreifers zusätzlich eine chemische Reinigung mit Reinigungs- oder Desinfektionsmittel oder eine Dampf- oder Strahlreinigung. Auf diese Weise werden mit großem Vorteil auch Mikroorganismen und dergleichen vom Förderband entfernt. Dabei ist insbesondere eine Anordnung vorgesehen, in der die Reinigungsdüse ein Reinigungsfluid in einer Förderbanddrehrichtung gesehen vor Kontaktierung des Förderbandes mit der Abstreifkante aufbringend ist. Damit wird vorteilhaft ein Verschleiß der Abstreifkante reduziert, eine Laufruhe erhöht und ein Laufgeräusch reduziert.

Außerdem ist es in Ausgestaltung der Erfindung noch vorgesehen, dass die Reinigungsvorrichtung einen Sensor aufweist, der einen Befüllzustand des Förderbandes bestimmend ist und/oder dass die Reinigungsvorrichtung eine Steuerung aufweist. Der Sensor ist einen Leerlaufzustand des Förderbandes bestimmend, in dem kein Fördergut auf dem Förderband gefördert wird. Es ist vorgesehen, dass die Reinigungsdüse das Förderband nur in einem Leerlaufzustand reinigend ist, sodass eine Kontamination von Fördergut mit Reinigungsfluid verhindert ist. Die Steuerung ermöglicht eine Variation von Durchfluss oder Druck des aus der Reinigungsdüse austretenden Reinigungsfluids über eine Benutzereingabe. In einer besonders bevorzugten Ausführung ist eine kabellose Weiterleitung der Benutzereingabe an einer Eingabeeinheit, beispielsweise einem Computer, an die Steuerung vorgesehen.

Die Erfindung wird im Folgenden anhand von Figuren beispielhaft beschrieben. Dabei zeigen:
Fig.1 eine Seitenansicht eines erfindungsgemäßen Abstreifsegments,
Fig. 2 eine perspektivische Ansicht des erfindungsgemäßen Abstreifsegments,
Fig. 3 eine weitere Ansicht des erfindungsgemäßen Abstreifsegments,
Fig. 4 eine Frontansicht eines erfindungsgemäßen, einstückigen Abstreifsegments,
Fig. 4.1 eine perspektivische Ansicht des in der Fig. 4 dargestellten Abstreifsegments,
Fig. 4.2 eine perspektivische Ansicht des in der Fig. 4 dargestellten Abstreifsegments mit Abstreifkante,
Fig. 4.3 eine Ausführungsform eines Grundkörpers einer erfindungsgemäßen Abstreifvorrichtung,
Fig. 5 eine Ausführungsform einer erfindungsgemäßen Abstreifvorrichtung in perspektivischer Darstellung.
Fig. 5.1 eine Seitenansicht des in Fig.5 gezeigten Abstreifers und
Fig. 5.2 eine Frontansicht des in Fig.5 gezeigten Abstreifers
Fig. 6 eine weitere Ausführungsform der erfindungsgemäßen Abstreifvorrichtung,
Fig. 7 eine andere Ausführungsform eines erfindungsgemäßen Abstreifers.

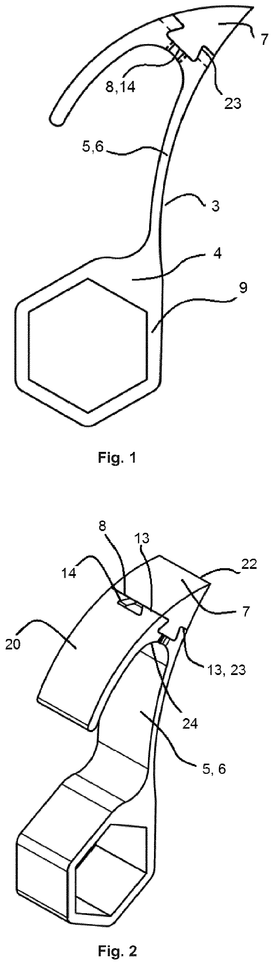

In der Fig.1 ist ein erfindungsgemäßes Abstreifsegment 3 in Seitenansicht dargestellt. Eine Segmentbasis 4 ist in Form eines Hohlkörpers 9 ausgebildet, wobei dieser die Grundflächenform eines regelmäßigen Sechsecks hat. Diese Ausführung hat den Vorteil, dass die Segmentbasis 4 verdrehsicher auf einen hier nicht dargestellten, korrespondierend geformten Grundkörper 2 aufschiebbar ist. Dies ermöglicht eine effektive Kraftübertragung zwischen den beiden Elementen. Die Segmentbasis 4 ist über ein Übergangselement 5 mit einer Abstreifkante 7 verbunden. Um einen stabilen Übergang zwischen Segmentbasis 4 und Übergangselement 5 zu ermöglichen, ist die Materialdicke der Segmentbasis 4 an der, der Abstreifkante 7 zugewandten, Seite erhöht. Das Übergangselement 5 ist erfindungsgemäß als schmaler Übergangssteg 6 ausgebildet. Erfindungsgemäß sind dabei insbesondere auch Übergangsstege 6 mit verschiedenen Dicken, sodass die für das zu entfernende Schüttgut und das Förderbandmaterial entsprechend notwendige Federsteifigkeit des Übergangstegs 6 konstruierbar ist. Mit anderen Worten stellt die abgebildete Materialstärke nur ein Beispiel dar und kann erfindungsgemäß größer oder kleiner sein. Die Abstreifkante 7 ist über Verbindungselemente 8 mit dem Übergangselement 5 verbunden. Dafür weist das Übergangselement 5 an einer zur Abtreifkante 7 weisenden Verbindungsfläche 23 Vertiefungen 14 auf, die sich in Richtung der Abstreifkante 7 verjüngend sind und damit ein festes Verbinden auch bei Zugwirkung erlauben.

Fig. 2 zeigt eine perspektivische Darstellung des erfindungsgemäßen Abstreifsegments 3. Gut erkennbar sind sich, an mehreren Seiten 13 der Verbindungsfläche 23, in Richtung der Abstreifkante 7 verjüngende Vertiefungen 14 zur festen Verbindung von Abstreifsegment 3 und Abstreifkante 7 dargestellt. Dabei führt sowohl das Eingießen eines Kantenmaterials in eine Gießform, in der die Abstreifsegmente 3 eingesetzt sind, zu einer erfindungsgemäßen Verbindung von Abtreifkante 7 und Abstreifsegmenten 3, als auch die separate Fertigung der Abstreifkante 7 und die Verbindung von Abstreifkante 7 und Abstreifsegment 3 mittels beispielsweise Einschieben oder Einklicken. Insbesondere im Hinblick auf eine eingeschobene oder eingeklickte Abstreifkante 7 ist die Erfindung nicht auf als Vertiefungen 14 geformte Verbindungsmittel 8 zur Verbindung von Übergangselement 5 und Abstreifkante 7 beschränkt. Die Abstreifkante 7 weist in der gezeigten Ausführungsform einen keilförmigen Querschnitt auf, sodass, gegenüberliegend zu einer, die Verbindungsseite 23 kontaktierenden, Seite der Abstreifkante 7, eine Kante 22 gebildet ist, die im Benutzungsfalll ein hier nicht gezeigtes Förderband 30 kontaktierend ist. An einer der Verbindungsseite 23 gegenüberliegende Seite des Übergangselements 5 ist eine Mulde 24 ausgebildet, in der es zur Ansammlung von Schmutz und im Benutzungsfall zur Ansammlung von entfernten Schüttgut kommen kann. Um eine solche Ansammlung zu verhindern, ist ein Schutzsteg 20 vorgesehen, welcher sich von der Verbindungsfläche 23 in Richtung der Segmentbasis 4 erstreckend ist.

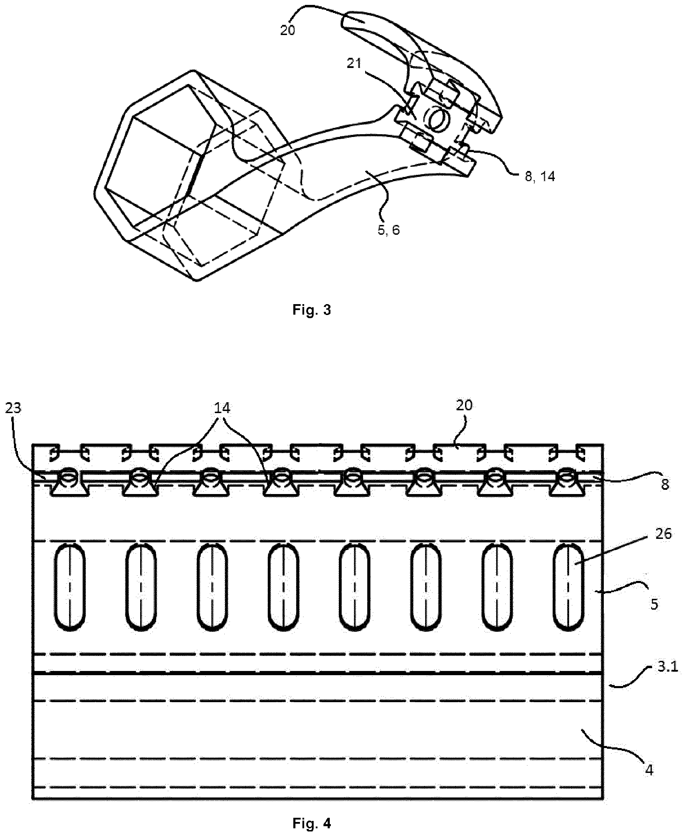

Fig. 3 zeigt eine weitere Ansicht eines erfindungsgemäßen Abstreifsegmentes. In dieser Ausführungsform sind Übergangssteg 6 und Schutzsteg 20 über Verbindungsmittel 21 miteinander verbunden, die in Form von Platten und Verbindungsschrauben ausgebildet sind.

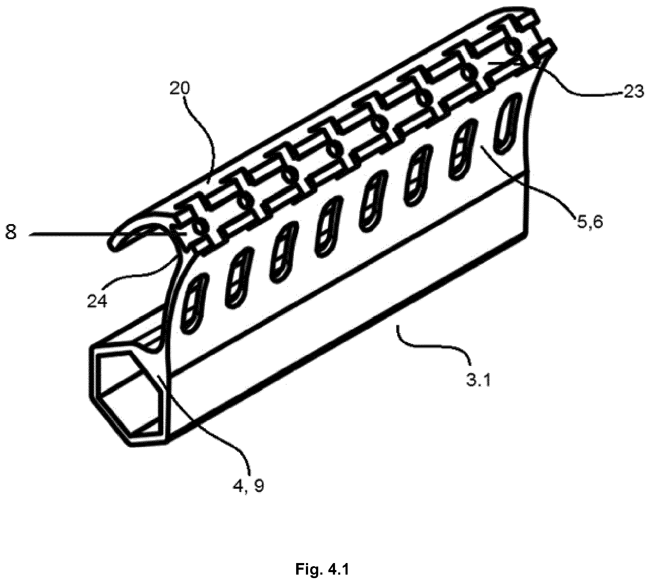

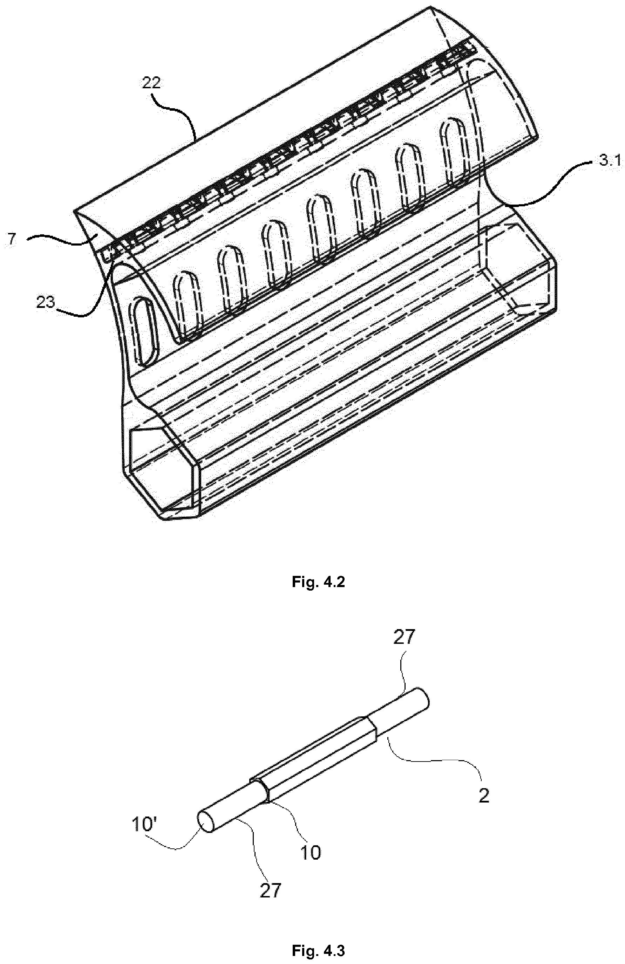

Fig. 4 zeigt eine Frontansicht eines erfindungsgemäßen, einstückigen Abstreifsegments. Das einstückige Abstreifsegment 3.1 weist Langlöcher 26 auf, die entlang einer Längsachse des Abstreifsegments 3.1 angeordnet sind. Dabei sind die Langlöcher 26 jeweils derart angeordnet, das ihre Längsachse jeweils senkrecht zu einem hier nicht dargestellten Grundkörper 2, bzw. senkrecht zu einer Verbindungsfläche 23 des Abstreifsegments 3.1 mit einer ebenfalls nicht dargestellten Abstreifkante 7 orientiert ist. Das Abstreifsegment 3.1 weist, wie auch die in Fig. 1 - 3 dargestellten Abstreifsegmente 3, die in einer Mehrzahl in einem erfindungsgemäßen Abstreifer 1 angeordnet sind, ein Übergangselement 5 auf, welches eine Segmentbasis 4 mit der hier nicht dargestellten Abstreifkante 7 verbindend ist. An der Verbindungsfläche 23 weist das Abstreifsegment 3.1 eine Verbindungseinrichtung 8 in Form einer sich entlang der Längsachse des Abstreifsegments 3.1 erstreckenden Vertiefung auf. Weiterhin weist die Verbindungsfläche 23 eine Mehrzahl an Vertiefungen 14 auf, die sich in Richtung einer Abstreifkante 7 verjüngend sind. Erkennbar ist auch ein sich an der Verbindungsfläche 23 anschließender Schutzsteg 20.

In der Fig. 4.1 ist eine perspektivische Ansicht des in der Fig. 4 dargestellten, einstückigen Abstreifsegments 3.1 gezeigt. Dabei ist deutlich erkennbar, dass das die Segmentbasis 4 und die nicht dargestellte Abstreifkante 7 verbindende Übergangselement 5 als schmaler Übergangssteg 6 ausgebildet ist. Durch Materialaussparungen in Form der Langlöcher 26 ist die Elastizität des Übergangssteges 6 in den Bereichen zwischen den Langlöchern 26 erhöht, sodass innerhalb des Abstreifsegments 3.1 eine gewisse Beweglichkeit in Richtung senkrecht zum Übergangssteg 6 ermöglicht ist. Die Segmentbasis 4 ist in Form eines sechseckigen Hohlkörpers 9 aufgebaut, sodass eine einfache, drehfeste Verbindung mit einem hier nicht dargestellten Grundkörper 2 ermöglicht ist. Der Schutzsteg 20 ist sich von der Verbindungsfläche 23 in Richtung der Segmentbasis 4, in etwa parallel zum Übergangssteg 6 erstreckend, sodass er eine Mulde 24, die an einer der Verbindungsfläche 23 gegenüberliegenden Seite des Übergangselements 5 ausgebildet ist, vor Ablagerungen von Schmutz und Fördergutresten schützend ist. Gut erkennbar ist auch die Verbindungseinrichtung 8 in Form einer Vertiefung, die sich zur Verbindung des Abstreifsegments 3.1 mit der Abstreifkante 7, entlang einer Längsachse des Abstreifsegments 3.1 erstreckend ist.

In der Fig. 4.2 ist eine perspektivische Ansicht des in der Fig. 4 und Fig. 4.1 dargestellten, einstückigen Abstreifsegments 3.1 gezeigt, bei der das Abstreifsegment 3.1 mit der Abstreifkante 7 verbunden ist. Dabei ist die Abstreifkante 7 im Querschnitt keilförmig ausgebildet und eine Kante 22 der Abstreifkante 7 zur Kontaktierung des hier nicht gezeigten Förderbandes 30 ist parallel zur Verbindungsfläche 23 orientiert.

Fig. 4.3 zeigt eine vorteilhafte Ausführungsform eines Grundkörpers 2. Zur Herstellung einer drehfesten Verbindung mit einem korrespondierend geformten, hier nicht dargestellten Hohlkörper 9, weist der Grundkörper 2 in einem zentralen Abschnitt eine sechseckige Grundfläche 10 auf. An Außenbereichen 27 an den Enden des Grundkörpers 2 ist dieser abgedreht, sodass er in diesen Bereichen eine kreisförmige, weitere Grundfläche 10' aufweist, die insbesondere vorteilhaft zur Verbindung mit hier nicht dargestellten Verbindungsmitteln 21 ist.

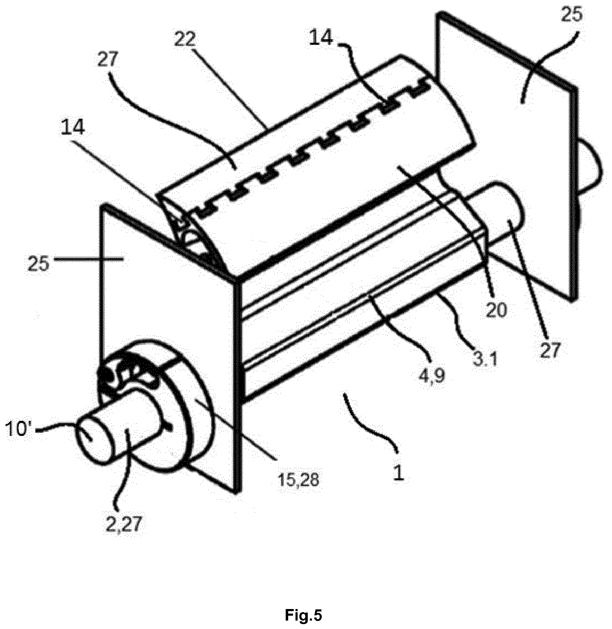

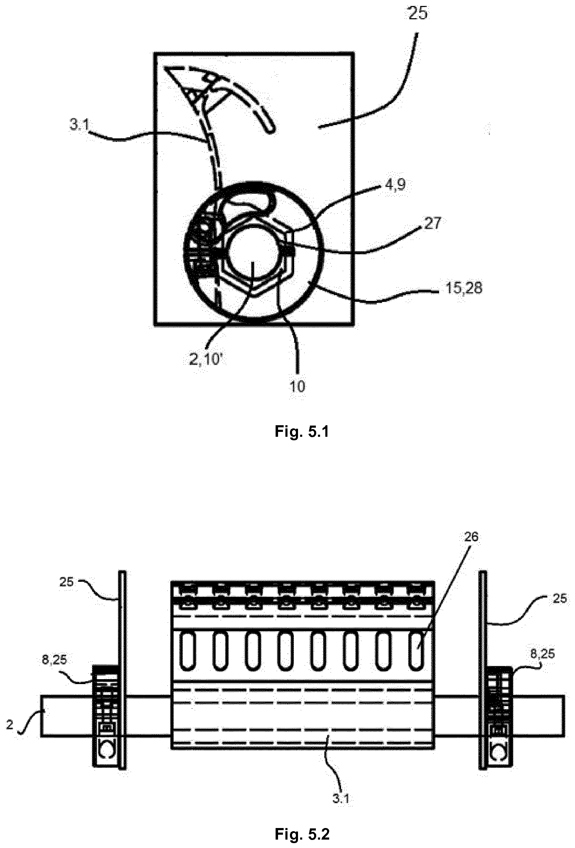

Die Fig. 5 zeigt eine weitere Ausführungsform einer erfindungsgemäßen Abstreifvorrichtung 1 in perspektivischer Darstellung, wobei die Abstreifvorrichtung 1 ein einstückiges Abstreifelement 3.1 mit hier nicht dargestellten Langlöchern 26 aufweist. Die Abstreifvorrichtung 1 ist an einer Förderbandkonstruktion 25 angeordnet dargestellt. Die Abstreifkante 7 ist einstückig ausgebildet. Durch die an verschiedenen Seiten der Verbindungsfläche 23 des Übergangselements 5 ausgebildeten, sich in Richtung der Abstreifkante verjüngenden Vertiefungen 14, ist die Abstreifkante 7 gegen ein Lösen vom Abstreifsegment 3.1 in Richtung senkrecht zur Verbindungsfläche 23 gesichert. Ein in Form einer Welle ausgebildeter Grundkörper 2 ist mit der als Hohlkörper 9 ausgebildeten Segmentbasis 4 drehfest verbunden. Dazu weist der Grundkörper 2 im Bereich, in dem er die Segmentbasis kontaktierend ist, eine zur Segmentbasis 4 korrespondierende, hier nicht dargestellte, sechseckige Grundfläche 10 auf. Grundkörper 2 und Segmentbasis 4 sind insbesondere durch eine Pressverbindung miteinander verbunden, wodurch weitere Verbindungsmittel entfallen. In die Segmentbasis 4 nicht kontaktierenden Außenbereichen 27 weist der Grundkörper 2 zur Verbindung mit einer Befestigungsvorrichtung 15 eine weitere Grundfläche 10' auf, welche abgedreht ist. Die Befestigungsvorrichtung 15 ist in der dargestellten Ausführung in Form von zwei Klemmringen 28 ausgeführt, die an gegenüberliegenden Seiten des Grundkörpers 2 parallel zueinander angeordneten Elementen der Förderbandkonstruktion 25, die beispielsweise als eine Blechbehausung ausgeführt sein kann, angeordnet sind. Die Klemmringe 28 sind jeweils in Form eines Schnellspannklemmrings ausgebildet und sind den Grundkörper 2 an gegenüberliegenden Seiten klemmend. Neben der rotatorischen Fixierung, sind die Klemmringen 28 den Grundkörper 2 axial gegenüber der Förderbandkonstruktion fixierend. Bei Lösen des Klemmrings 28 ist der Grundkörper 2 gegenüber der Befestigungsvorrichtung 15 drehbar. In diesem Fall ist auch das Abstreifsegment 3.1 relativ zur Befestigungsvorrichtung 15, zur Förderbandkonstruktion 25 und damit auch relativ zu einem nicht gezeigten Förderband 30 drehbar, was gleichbedeutend ist mit einer Abschwenkbewegung des Abstreifsegmentes 3.1, beispielsweise zu Reinigungs- oder Wartungszwecken.

In der Fig. 5.1 ist eine teilweise geschnittene Seitenansicht des in Fig. 5 gezeigten Abstreifers dargestellt. Dabei sind insbesondere die beiden unterschiedlichen Grundflächen 10, 10' des Grundkörpers erkennbar - in einem die Segmentbasis 4 des Abstreifsegments 3.1, welche in Form eine sechseckigen Hohlkörpers 9 ausgebildet ist, kontaktierenden Bereich weist der Grundkörper 2 eine sechseckige Grundfläche 10 auf, durch die eine drehfeste Kopplung zwischen Segmentbasis 4 und Grundkörper 2 gewährleistet ist. In einem die Segmentbasis 4 nicht kontaktierenden Außenbereich 27 weist der Grundkörper 2 eine weitere, kreisförmig abgedrehte Grundfläche 10' auf. Diese ermöglicht einerseits ein Einspannen innerhalb des Klemmring 28 und damit die Befestigung des Grundkörpers 2 an der Förderbandkonstruktion 25, andererseits ermöglicht sie eine Drehung des Grundkörpers 2 relativ zur Förderbandkonstruktion 25 bei nicht gespanntem Klemmring 28.

Fig. 5.2 zeigt eine Frontansicht des in Fig. 5 und Fig. 5.1 gezeigten Abstreifers. Dabei ist insbesondere die an gegenüberliegenden Seiten des Grundkörpers 2 an dessen Außenbereichen 27 angeordnete Befestigungsvorrichtung 15 in Form von Klemmringen 28 erkennbar, die an zwei gegenüberliegenden, plattenförmigen Elementen der Förderbandkonstruktion 25 angeordnet sind. Weiterhin sind die Langlöcher 26 des einstückigen Abstreifsegments 3.1 gut erkennbar.

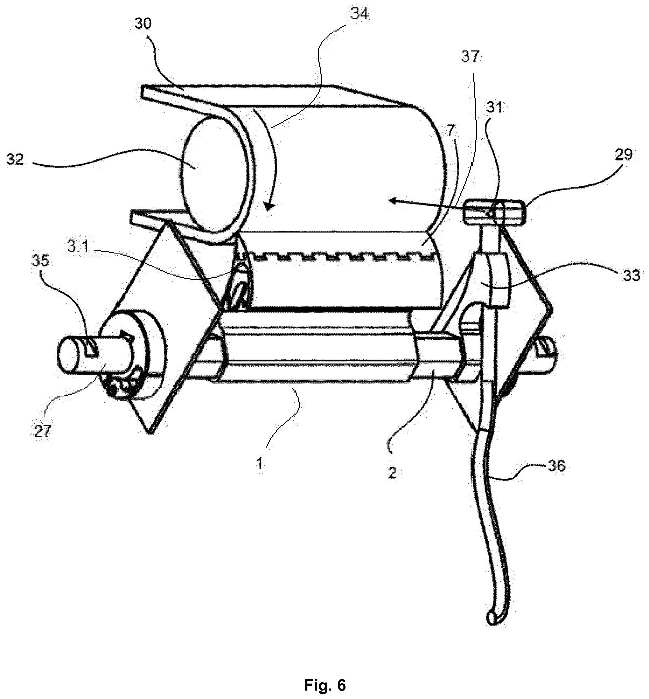

Fig. 6 zeigt eine weitere Ausführungsform der erfindungsgemäßen Abstreifvorrichtung 1. Außerdem ist ein von der Abstreifvorrichtung 1 zu reinigendes Förderband 30 gezeigt. Die Abstreifvorrichtung 1 ist dabei in einem Bereich des Förderbandes 30 angeordnet, in dem eine Umlenktrommel 32 das Förderband 30 umlenkend und damit zurückführend ist. In der gezeigten Ausführungsform weist die Abstreifvorrichtung 1 eine Reinigungsdüse 29 auf. Diese ist im Betriebszustand ein Reinigungsfluid auf das zu reinigendes Förderband 30 aufbringend. Dabei ist sowohl eine Aufbringung in Form von Dampf oder Nebel als auch als Strahl bzw. Hochdruckstrahl vorgesehen. Das Reinigungsfluid ist aus einer Düsenöffnung 31 der Reinigungsdüse 29 austretend, wobei die Reinigungsdüse derart am Förderband 30 angeordnet ist, dass sich die Düsenöffnung 31 in einer Sichtlinie 37 zum Förderband 30 befindet. Dabei ist eine Verbindungsvorrichtung 33 die Reinigungsdüse 29 mit dem Grundkörper 2 verbindend. Vorzugsweise weist die Verbindungsvorrichtung 33 in einem den Grundkörper 2 kontaktierenden Bereich eine zum Grundkörper 2 korrespondierende Hohlkörperform auf, um eine drehfeste Verbindung zu gewährleisten. Die Reinigungsdüse 29 ist derart gegenüber dem Förderband 30 angeordnet, dass sie ein Reinigungsfluid in einer Förderbanddrehrichtung 34 gesehen vor Kontaktierung des Förderbandes 30 mit der Abstreifkante 7 aufbringend ist. Vor der Reinigung des Förderbandes 30 durch die Abstreifkante 7 ist damit eine Reinigung des Förderbandes 30 durch die Reinigungsdüse 29 stattfindend. Zur Versorgung der Reinigungsdüse 29 mit Reinigungsfluid ist ein Schlauch 36 an dieser angeordnet. An den Außenbereichen 27 des Grundkörpers 2 sind Schlüsselflächen 35 in Form von rechteckigen Einkerbungen angeordnet, sodass der Grundkörper 2 mit Hilfe eines gewöhnlichen Schraubenschlüssels drehbar ist. Damit ist insbesondere das Abschwenken von Abstreifsegment 3.1 und Abstreifkante 7 vom Förderband 30 ermöglicht.

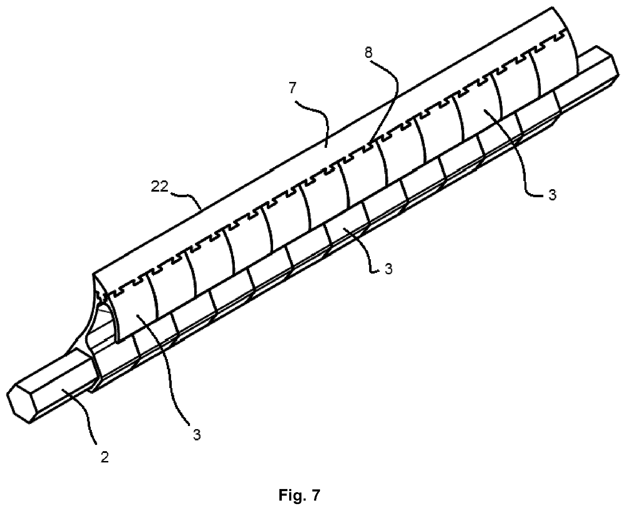

In der Fig. 7 ist eine andere Ausführungsform eines erfindungsgemäßen Abstreifers dargestellt. Hierbei sind mehrere Abstreifsegmente 3 auf einen Grundkörper 2 aufgeschoben angeordnet und über Verbindungseinrichtungen 8 mit einer einstückigen Abstreifkante 7 verbunden, wodurch eine glatte Kante 22 zur Kontaktierung eines hier nicht dargestellten Förderbandes 30 gebildet ist.

Der erfindungsgemäße Abstreifer kombiniert mit großem Vorteil eine aus der Segmentbauweise folgende Flexibilität hinsichtlich Konstruktion und erleichterte Ausgleichsbewegung der Abstreifsegmente gegeneinander bzw. innerhalb des einstückigen Abstreifsegments und einer Kompaktheit aufgrund der erfindungsgemäß einstückigen Abstreifkante, die einerseits eine effektive Reinigung ermöglicht und andererseits die Abstreifsegmente zu Kraftübertragungs- und Ausgleichszwecken miteinander verbindend ist.

### BEZUGSZEICHENLISTE

- 1: Abstreifvorrichtung
- 2: Grundkörper
- 3: Abstreifsegment
- 3.1: einstückiges Abstreifsegment
- 4: Segmentbasis
- 5: Übergangselement
- 6: Übergangssteg
- 7: Abstreifkante
- 8: Verbindungseinrichtung
- 9: Hohlkörper
- 10: Grundfläche
- 10': weitere Grundfläche
- 11:
- 12:
- 13: Seite
- 14: Vertiefung
- 15: Befestigungsvorrichtung
- 16:
- 17:
- 18: erstes Ende
- 19: zweites Ende
- 20: Schutzsteg
- 21: Verbindungsmittel
- 22: Kante
- 23: Verbindungsfläche
- 24: Mulde
- 25: Förderbandkonstruktion
- 26:
- 27: Außenbereich
- 28: Klemmring
- 29: Reinigungsdüse
- 30: Förderband
- 31: Düsenöffnung
- 32: Umlenktrommel
- 33: Verbindungsvorrichtung
- 34: Förderbandrehrichtung
- 35: Schlüsselfläche
- 36: Schlauch
- 37: Sichtlinie

## Patentansprüche

1. Abstreifvorrichtung (1) für die Reinigung von Förderbändern (30) aufweisend eine Abstreifkante (7) einen Grundkörper (2) und eine Mehrzahl von an diesem angeordneten Abstreifsegmenten (3) oder ein einstückiges, an diesem angeordnetes Abstreifsegment (3.1), welches entlang einer zum Grundkörper (2) parallelen Achse eine Mehrzahl von Langlöchern (26) aufweist, wobei jedes Abstreifsegment (3, 3.1) eine Segmentbasis (4) und ein daran angeordnetes Übergangselement (5) aufweist, wobei jedes Abstreifsegment (3) an der Segmentbasis (4) mit dem Grundkörper (2) lösbar verbunden ausgebildet ist, **dadurch gekennzeichnet, dass** das Übergangselement (5) ein federnder Übergangssteg (6) ist und dass die Abstreifkante (7) einstückig und alle Abstreifsegmente (3, 3.1) miteinander verbindend ausgebildet ist.

2. Abstreifvorrichtung (1) nach Anspruch 1, **dadurch gekennzeichnet, dass** die Abstreifkante (7) einen keilförmigen Querschnitt aufweist.

3. Abstreifvorrichtung (1) nach Anspruch 1 oder 2, **dadurch gekennzeichnet, dass** die Abstreifkante (7) formschlüssig mit dem einstückigen Abstreifsegment (3.1) oder den Abstreifsegmenten (3) verbunden ist, insbesondere in eine Verbindungseinrichtung (8) eingeschoben, eingeklickt oder eingegossen ist.

4. Abstreifvorrichtung (1) nach Anspruch 1, 2 oder 3, **dadurch gekennzeichnet, dass** die Segmentbasis (4) einen Hohlkörper (9) aufweist und dieser auf den korrespondierend geformten Grundkörper (2) aufgeschoben ist.

5. Abstreifvorrichtung (1) nach einem der vorherigen Ansprüche, **dadurch gekennzeichnet, dass** der Grundkörper (2) zylinderförmig ist, insbesondere eine kreisförmige, rechteckige, quadratische oder sechseckige Grundfläche (10) aufweist und insbesondere aus Stahl oder Kunststoff gefertigt ist.

6. Abstreifvorrichtung (1) nach Anspruch 4 oder 5, **dadurch gekennzeichnet, dass** der auf den Grundkörper (2) aufgeschobene Hohlkörper (9) axial fixiert wird, insbesondere durch Buchsen, Hülsen, Gewindestift oder mittels Aufpressen durch Kraftschluss.

7. Abstreifvorrichtung (1) nach einem der vorherigen Ansprüche, **dadurch gekennzeichnet, dass** der Grundkörper (2) in einem das einstückige Abstreifsegment (3.1) oder die Abstreifsegmente (3) kontaktierenden Bereich eine sechseckige Grundfläche (10) aufweist und in das einstückige Abstreifsegment (3.1) oder die Abstreifsegmente (3) nicht kontaktierenden Außenbereichen 27 eine kreisförmig abgedrehte, weitere Grundfläche (10') aufweist.

8. Abstreifvorrichtung (1) nach einem der Ansprüche 3 - 7, **dadurch gekennzeichnet, dass** die Verbindungseinrichtung (8) an einer zur Abstreifkante (7) weisenden Seite (23) sich in Richtung von der Abstreifkante (7) weg verbreiternde Vertiefungen (14) aufweist.

9. Abstreifvorrichtung (1) nach einem der vorherigen Ansprüche, **dadurch gekennzeichnet, dass** die Abstreifsegmente (3, 3.1) und die Abstreifkante (7) aus Kunststoff gefertigt sind, insbesondere aus Polyurethan.

10. Abstreifvorrichtung (1) nach einem der vorherigen Ansprüche, **dadurch gekennzeichnet, dass** sie eine Befestigungsvorrichtung (15) zur Befestigung der Abstreifvorrichtung (1) relativ zu einem Förderband aufweist.

11. Abstreifvorrichtung (1) nach Anspruch 11, **dadurch gekennzeichnet, dass** die Befestigungsvorrichtung (15) einen Klemmring (28), insbesondere einen Schnellspannklemmring aufweist.

12. Abstreifvorrichtung (1) nach einem der vorherigen Ansprüche, **dadurch gekennzeichnet, dass** der Übergangssteg (6) gebogen ist.

13. Abstreifvorrichtung (1) nach einem der vorherigen Ansprüche, **dadurch gekennzeichnet, dass** am Grundkörper (2) eine Reinigungsvorrichtung in Form einer Reinigungsdüse (29) angeordnet ist, wobei eine Düsenöffnung (31) im Betriebszustand in einer Sichtlinie (37) zum Förderband (30) angeordnet ist.

14. Abstreifvorrichtung (1) nach Anspruch 15, **dadurch gekennzeichnet, dass** die Reinigungsvorrichtung einen Sensor aufweist, der einen Befüllzustand des Förderbandes (30) bestimmend ist und/oder dass die Reinigungsvorrichtung eine Steuerung aufweist.
